# EUROPÄISCHE PATENTSCHRIFT

(11) **EP 4 011 612 B1**
(45) Veröffentlichungstag und Bekanntmachung des Hinweises auf die Patenterteilung: **22.11.2023**
(21) Anmeldenummer: 21217023.7
(22) Anmeldetag: 02.04.2019
(51) Int. Cl.: B32B 21/02, B32B 21/04, B32B 21/06, B32B 27/00, B32B 27/10, B32B 27/18, B32B 27/42, B32B 29/00, C09D 5/24, C09D 7/61, C09D 7/62, C09D 7/40, D21H 19/36, D21H 19/62, D21H 27/18

(54) **IMPRÄGNAT MIT ANTISTATISCHEN EIGENSCHAFTEN**
IMPREGNATE WITH ANTISTATIC PROPERTIES
IMPRÉGNAT AYANT DES PROPRIÉTÉS ANTISTATIQUES

(43) Veröffentlichungstag der Anmeldung: 15.06.2022
(62) Teilanmeldung aus: 19166831.8
(73) Patentinhaber: Flooring Technologies Ltd., Kalkara SCM1001 (MT)
(72) Erfinder: Gier, Andreas, 66399 Mandelbachtal (DE); Kalwa, Norbert, 32805 Horn-Bad Meinberg (DE)
(74) Vertreter: Maikowski & Ninnemann Patentanwälte Partnerschaft mbB

(56) Entgegenhaltungen:
- EP-A1- 2 272 668
- EP-A1- 3 231 519
- EP-A1- 3 231 596
- CN-A- 105 150 640
- KR-B1- 101 423 280
- Anonymous: "Why is particle size important?", A GUIDEBOOK TO PARTICLE SIZE ANALYSIS, 26 September 2012 (2012-09-26), pages 1-31, XP055573025, Retrieved from the Internet: URL:https://www.horiba.com/fileadmin/uploa ds/Scientific/Documents/PSA/PSA_Guidebook. pdf [retrieved on 2019-03-22]

## Beschreibung

Die vorliegende Erfindung betrifft ein Imprägnat mit antistatischen Eigenschaften, ein Verfahren zur Herstellung desselbigen, sowie ein Laminat und eine Holzwerkstoffplatte umfassend solch ein Imprägnat.

### Beschreibung

Bei vielen Gebrauchsgegenständen ist eine wesentliche Voraussetzung, dass bei der Nutzung keine elektrostatische Aufladung erfolgt. Diese ist zum einen unangenehm, da die elektrostatische Ladung zur Entladung über den Nutzer abfließt, zum anderen können dadurch natürlich auch Schäden an elektronischen Bauteilen auftreten. In einigen Bereichen sind Gegenstände, die zu elektrostatischer Aufladung neigen, aus Sicherheitsgründen sogar verboten.

Aus diesen Gründen trachten Hersteller danach entweder für spezielle Anwendungen eine Sonderqualität im Sortiment zu haben oder grundsätzlich alle Produkte in mindestens antistatischer Qualität herzustellen.

Eine Lösung des Problems ist die Anhebung der relativen Luftfeuchte durch Befeuchtungsgeräte. Dies ist eine relativ teure Lösung, die den Mangel nur indirekt behebt.

Wesentlich nachhaltigere Lösung gehen in die Richtung, in die zur Herstellung von dekorativen Oberflächen von Bedarfsgegenständen verwendeten Imprägnate bzw. Imprägnatpapiere Mittel zur Erhöhung der Leitfähigkeit einzuarbeiten. Dabei tritt aber häufig das Problem auf, dass die entsprechenden Chemikalien nicht besonders gut in den zur Imprägnierung verwendeten Melamin-Formaldehydharzen löslich sind. Zudem verschlechtern diese Mittel häufig, die sehr guten Oberflächeneigenschaften der der ausgehärteten Melaminharze.

Eine Idee um dieses Problem zu vermeiden ist in der EP 2 537 597 A1 geschildert. Dort wird bei der Herstellung eines Laminatbodens u. a. auf eine Holzwerkstoffplatte oder auf die Unterseite von Imprägnaten abschnittsweise ein Mittel zur Erhöhung der Leitfähigkeit aufgebracht, wobei das Mittel ein mit elektrisch leitenden Partikeln versehener PVAC- Kleber oder PUR-Kleber ist. Diese Verfahrensweise stellt sicher, dass sich kein leitfähigkeitserhöhendes Mittel direkt an der Oberfläche des Laminatbodens befindet und damit eine Verschlechterung der Oberflächeneigenschaften hervorruft. Allerdings wird durch die Papierlage natürlich auch der benötigte Effekt reduziert.

Aus der US 7,122,585 B2 ist bekannt, Film-bildende Polymerzusammensetzungen mit einem leitfähigen Additiv als Beschichtungspulver auf Holzmaterialien, wie z.B. MDF-Platten aufzubringen. Als leitfähige Additive werden u.a. Kohlenstofffasern, Kohlenstoffnanoröhren, Aktivkohle, metallische Füllstoffe, mit leitfähigen Materialien beschichtete Füllstoffe oder leitfähige Polymere benannt. Das Beschichtungspulver wird mittels elektrostatischer Verfahren auf das Holzmaterial aufgetragen.

EP 3231596 A1 betrifft ein Trägermaterial (z.B. Holzwerkstoffplatte, Papierlage) mit einer Harzschicht, wobei die Harzschicht ein Formaldehydharz, ein Polymer und eine silanhaltige Verbindung der allgemeinen Formel RaSiX(4-a) umfasst. Die Harzschicht kann ebenfalls weitere Füllstoffe oder Additive wie zum Beispiel leitfähige Substanzen (Ruß, Kohlefasern, Kohlenstoffnanoröhren) zum Aufbau einer antistatischen Oberfläche enthalten. EP 2 272 668 A1 betrifft in dem Ausführungsbeispiel die Verwendung der zwei Silane Tetraethoxysilan und Methyltriethoxysilan. EP 3 231 519 A1 betrifft in dem Ausführungsbeispiel 1 ebenfalls die Verwendung der zwei Silane Tetraethoxysilan und Methyltriethoxysilan.

Die bisher bekannten Ansätze sind allerdings aufwendig und teuer. Auch sind die gewünschten Effekte nicht dauerhaft und es wird eine Produktverschlechterung in Kauf genommen.

Der vorliegenden Erfindung lag daher die technische Aufgabe zu Grunde ein Imprägnat herzustellen, das eine gute elektrische Leitfähigkeit besitzt. Dabei soll eine Verschlechterung von Oberflächeneigenschaften vermieden werden. Auch soll die Erhöhung der Leitfähigkeit möglichst niedrige Kosten verursachen. Zudem sollte die Einarbeitung des Mittels in eine Rezeptur problemlos möglich sein. Der Einsatz von toxischen oder umweltproblematischen Mitteln soll in jedem Fall ausgeschlossen sein.

Diese Aufgabe wird erfindungsgemäß durch ein Imprägnat mit antistatischen Eigenschaften mit den Merkmalen des Anspruchs 1 gelöst.

Entsprechend wird ein Imprägnat mit einer imprägnierten Papierlage mit antistatischen Eigenschaften zur Verwendung in Laminaten oder zum Beschichten von Holzwerkstoffplatten bereitgestellt, wobei das zur Imprägnierung und/oder Beschichtung des Papieres verwendete Harz
- kohlenstoffbasierte Partikel, insbesondere Kohlenstoffnanoröhren (CNT) oder Graphen, umfasst, wobei die Oberfläche der kohlenstoffbasierten Partikel modifiziert ist mit
- mindestens einer Verbindung mit der allgemeinen Formel (la)

   **R¹ₐSiX₍₄₋ₐ₎** **(Ia)**,

   wobei
   - X Methoxy, Ethoxy, n-Propoxy oder i-Propoxy ist,
   - R¹ ein organischer Rest ist ausgewählt aus der Gruppe bestehend aus Methyl, Ethyl, Propyl oder Vinyl,,
   - wobei R¹ mindestens eine funktionelle Gruppe Q₁ aufweist, die ausgewählt ist aus einer Gruppe bestehend aus einer Acryl-, Acryloxy-, Methacryl-, Methacryloxy-, und Epoxid- Gruppe,
   - a = 1 oder 2 ist, und
- mindestens einer weiteren Verbindung der allgemeinen Formel (II)

   **R³_{c}SiX_{(4-c)}** **(II)**,

   wobei
   - X die obige Bedeutung aufweist,
   - R³ ein nicht-hydrolysierbarer organischer Rest R³ ist ausgewählt aus der Gruppe bestehend aus C1-C10 Alkyl, C6-C10 Aryl, und
   - c = 1, 2 oder 3 ist, und
- -SiO₂, Al₂O₃, ZrO₂, TiO₂-Partikel umfasst.

Demnach wird ein Harz in eine Papierschicht eingebracht (d.h. das Papier wird mit dem Harz getränkt) oder auf eine Papierschicht als Harzschicht aufgebracht, wobei dieses Harz leitfähigkeitserhöhende Mittel enthält. Dieses Mittel wird dem ohnehin verwendeten Harz, wie z.B. Melamin-Formaldehyd-Harz zugemischt.

Als besonders geeignete Leitfähigkeitsmittel haben sich kohlenstoffbasierte Partikel, wie Kohlenstoffnanoröhren, -plättchen oder -fasern und auch Graphen erwiesen. Es hat sich jedoch gezeigt, dass es für eine gute Leitfähigkeit wichtig ist, die Kohlenstoffpartikel ohne Agglomeratbildung in das Harzsystem einarbeiten zu können. Nur somit es gewährleistet auch mit geringen Anteilen an Kohlenstoffpartikeln eine gute elektrische Leitfähigkeit aufzubauen. Hierzu wurden die Kohlenstoffpartikel mit den angeführten Silanverbindungen an ihrer Oberfläche modifiziert. Dies erfüllt zum einen den Zweck, eine Agglomeration zu vermeiden und zum anderen, eine chemische Anbindung zum Melaminharz aufzubauen. Die mit den Silanverbindungen modifizierten Partikel lassen sich problemlos in die zur Imprägnierung verwendeten Harze einarbeiten.

Die sich ergebenen Vorteile sind eine einfache, prozesstechnisch unkomplizierte Lösung, ein langanhaltender Effekt sowie eine relativ geringe Auftragsmenge, wodurch die Gesamtkosten niedrig gehalten werden können.

Kohlenstoffnanoröhren sind große Makromoleküle in Form von Graphitfilmen (ein hexagonales Gitter mit sp²-Konfiguration), die in Form eines Zylinders aufgerollt sind ("singlewalled carbon nanotubes", SWNT). Neben den einwandigen Kohlenstoffnanoröhren sind auch Kohlenstoffnanoröhren mit zwei oder mehreren Wänden bekannt ("double walled carbon nanotubes" DWNT; multi-walled carbon nanotubes", MWNT), wobei letztere in Form eines Zylinders eingebracht in einem weiteren Zylinder beschrieben werden können.

Kohlenstoffnanoröhren zeichnen sich durch eine hohe Festigkeit, ein geringes Gewicht, eine spezifische elektronische Struktur, eine hohe Stabilität und eine hervorragende elektrische aber auch thermische und Leitfähigkeit aus.

Als Kohlenstoffnanoröhren (CNT) können einwandige Kohlenstoffnanoröhren (SWNT), zweiwandige Kohlenstoffnanoröhren (DWNT) oder mehrwandige Kohlenstoffnanoröhren (MWNT) verwendet werden, wobei besonders einwandige Kohlenstoffnanoröhren mit einem Durchmesser zwischen 1,0 - 2,5 nm, bevorzugt zwischen 1,5 und 2,0 nm und einer zwischen Länge 2 - 10 µm, bevorzugt 4- 8 µm, insbesondere bevorzugt 5-6 µm verwendet werden.

Eine mögliche Alternative zur Verwendung von Kohlenstoff-Nanoröhren stellen Nanolagen aus Graphen dar. Graphen ist eine weitere Modifikation des Kohlenstoffes mit einer zweidimensionalen, aromatischen Struktur, in der jedes Kohlenstoffatom von drei weiteren Kohlenstoffatomen umgeben ist, so dass sich hierbei ein wabenförmiges Muster ausbildet.

In einer Ausführungsform beträgt die dem Harz zugegebene Menge an kohlenstoffbasierten Partikeln zwischen 1,0 und 4,0 Gew%, bevorzugt zwischen 1,5 und 3,5 Gew%, besonders bevorzugt zwischen 2,0 und 3,0 Gew%, z.B. 2,5 Gew%.

Das vorliegend zur Imprägnierung und/oder Beschichtung des Papieres verwendete Harz basiert bevorzugt auf wässrigen Formaldehyd-haltigen Harzen, insbesondere Melamin-Formaldehyd-Harz, Harnstoff-Formaldehyd-Harz, Melamin-Harnstoff-Formaldehyd-Harz, Phenol-Formaldehyd-Harz oder Mischungen davon. Zusätzliche Polymere sind in dem vorliegend verwendeten Harz nicht enthalten.

Der Feststoffgehalt des die kohlenstoffbasierten Partikel enthaltenden Harzes liegt zwischen 50-75 Gew%, bevorzugt 55-70 Gew%, insbesondere bevorzugt bei 60 - 65 Gew%,
Der hydrolysierbare Rest X der Verbindungen der allgemeinen Formel (la) und (II) ist erfindungsgemäß Methoxy, Ethoxy, n-Propoxy oder i-Propoxy.

Der organische Rest R¹ der Verbindung der allgemeinen Formel (la) ist ausgewählt aus einer Gruppe bestehend aus Methyl, Ethyl, Propyl oder Vinyl.

In einer Ausführungsform ist die mindestens eine funktionelle Gruppe Q¹ der Verbindung der allgemeinen Formel (Ia) ausgewählt aus einer Gruppe enthaltend eine Epoxid- -Gruppe, Die funktionelle Gruppe Q¹ kann demnach vorteilhafterweise einen Rest mit einer Doppelbindung oder einer Epoxid-Gruppe auf, der mittels UV-Strahlung aktivierbar und polymerisierbar ist.

In einer Variante der vorliegenden Zusammensetzung können Verbindungen der allgemeinen Formel (la) gemäß R¹ₐSiX(₄₋ₐ), insbesondere R¹SiX₃ mit einer funktionellen Gruppe Q1 ausgewählt sein aus Methacryloxypropyltrimethoxysilan (MPTS) oder Silane mit einer Epoxyfunktionalisierung wie Glycidyloxypropyltriethoxysilan, oder Silane mit einer Vinylfunktionalisierung wie z.B. Vinyltrimethoxysilan.

Wie beschrieben, verfügt der Rest R¹ über mindestens eine funktionelle Gruppe Q¹.

Der Rest R³ der Verbindung gemäß der Formel (II) ausgewählt aus einer Gruppe bestehend aus C₁-C₁₀-Alkyl, und C₆-C₁₀-Aryl.

Es ist bevorzugt, wenn der Rest R³ ausgewählt ist aus der Gruppe enthaltend Methyl, Ethyl, n-Propyl, Isopropyl, n-Butyl, s-Butyl, t-Butyl, Pentyl, Hexyl, Heptyl, Octyl, Nonyl, Cyclohexyl, Vinyl, Phenyl und Naphthyl. Besonders bevorzugt sind Methyl, Ethyl, Propyl, Octyl, oder Phenyl-Reste.

Unter dem Begriff "nicht-hydrolysierbarer organischer Rest" ist im Rahmen der vorliegenden Erfindung ein organischer Rest zu verstehen, der in Gegenwart von Wasser nicht zur Bildung einer mit dem Si-Atom verknüpften OH-Gruppe oder NH₂-Gruppe führt.

Die Verbindung der allgemeinen Formel (II) kann insbesondere R³SiX₃ mit R³ als C1-C10 Alkyl-Gruppe, bevorzugt Methyl, Ethyl, Propyl, Pentyl, Hexyl, Heptyl, Octyl, oder als C6-C10-Aryl-Gruppe, bevorzugt Phenyl und mit X Methoxy, Ethoxy, n-Propoxy oder i-Propoxy, wie z.B. Octyltriethoxysilan, Phenyltriethoxysilan, umfassen.

In einer Variante der vorliegenden Zusammensetzung werden jeweils eine Verbindung der allgemeinen Formel (la) und eine Verbindung der allgemeinen Formel (II) verwendet.

Das (molare) Verhältnis des Silanverbindung der Formel (la) zu den Silanverbindungen der Formel (II) liegt bevorzugt zwischen 1 : 0,5 und 1 : 2, insbesondere bevorzugt zwischen 1 : 1 und 1 : 1,5.

In einer besonders bevorzugten Variante des vorliegenden Imprägnats umfasst das Harz Kohlenstoffnanoröhren modifiziert mit Glycidyloxypropylmethyldiethoxysilan, Glycidyloxypropyltriethoxysilan und Octyltriethoxysilan, bevorzugt einer Mischung aus Glycidyloxypropyltriethoxysilan und Octyltriethoxysilan.

Erfindungsgemäß enthält das Harz SiO₂, Al₂O₃, ZrO₂, TiO₂-Partikel. Die dabei bevorzugt verwendeten Partikel weisen eine Größe zwischen 2 und 400 nm, bevorzugt zwischen 2 bis 100 nm , insbesondere bevorzugt zwischen 2 bis 50 nm auf. Durch die Zugabe der anorganischen Partikel wird der Feststoffgehalt der Zusammensetzung erhöht, wodurch sich das Auftragsverhalten der Zusammensetzung verbessert. Auch wird durch den Zusatz von anorganischen Partikeln eine Schrumpfung und Rissbildung verhindert. Die anorganischen Partikel können in einem Mengenbereich von 0,1 bis 25 Gew%, bevorzugt 5 bis 20 Gew%, bezogen auf den Feststoffgehalt des Silan-Materials (Sol-Gel-Materials), verwendet werden.

Das vorliegend mit dem Harz zu imprägnierende und/oder zu beschichtende Papier ist bevorzugt Rohpapier, oder ein Dekor-, Kraft-, oder Overlaypapier mit Kernimprägnierung.; d.h. diese Papiere sind bereits mit einem konventionellen Harz (z.B. einem MelaminFormaldehydharz) vorimprägniert, wobei das modifizierte Harz zusätzlich aufgebracht wird. Im Falle eines Rohpapiers sind die Papiere nicht vorimprägniert..

Overlaypapiere sind dünne Papiere, welche typischerweise bereits mit einem konventionellen Melaminharz getränkt wurden Es sind ebenfalls Overlaypapiere erhältlich, in denen bereits abriebfeste Partikel, wie zum Beispiel Korundpartikel in das Harz des Overlays eingemischt sind, um die Abriebfestigkeit zu erhöhen.

Dekorpapiere sind Spezialpapiere zur Oberflächenveredelung von Holzwerkstoffen, die eine hohe Dekorvielfalt ermöglichen. So sind neben den typischen Aufdrucken von diversen Holzstrukturen weitergehende Aufdrucke von geometrischen Formen oder künstlerischen Produkten erhältlich. Eine Einschränkung in der Motivwahl gibt es faktisch nicht. Um eine optimale Bedruckbarkeit zu gewährleisten muss das verwendete Papier eine gute Glätte und Dimensionsstabilität aufweisen und ebenfalls für eine Penetration einer notwendigen Kunstharzimprägnierung geeignet sein.

Kraftpapiere weisen eine hohe Festigkeit auf und bestehen aus Zellstofffasern, denen Stärke, Alaun und Leim zugesetzt sind, um Oberflächeneffekte und Festigkeitssteigerungen zu erzielen.

In einer bevorzugten Ausführungsform ist das Papier teilweise oder vollständig mit dem modifizierten Harz imprägniert, wobei das modifizierte Harz in das Papier eindringt bzw. hinein penetriert. Vorliegend ist unter dem Begriff der "Imprägnierung" eine vollständige oder teilweise Durchtränkung der Papierlage mit der Harzsuspension aus Harz z.B. Formaldehydharz, und mit einer Silanverbindung modifizierten kohlenstoffbasierten Partikeln zu verstehen. Derartige Imprägnierungen können z.B. in einem Imprägnierbad, oder durch Streichen, Rakeln oder Sprühen aufgebracht werden.

Wie oben angeführt, kann auch vorgesehen sein, dass das Harz nicht in das Papier eindringt, sondern vielmehr auf der Oberfläche des Papiers aufgetragen wird und als (separate) Harzschicht auf der Papierschicht verbleibt. Dies ist insbesondere im Falle der Verwendung von bereits vorimprägnierten Papieren der Fall. Hierbei ist die mindestens eine Harzschicht auf mindestens einer Oberfläche bzw. einer Seite, d.h. Oberseite und/oder Unterseite, des Imprägnats angeordnet.

Die Papiergewichte können über einen Bereich zwischen 30 und 250 g/m² variieren. So kann das Papiergewicht z.B. von Dekorpapieren zwischen 30 und 150 g/m², bevorzugt zwischen 50 und 120 g/m², insbesondere bevorzugt zwischen 80 und 100 g/m² liegen. Im Falle eine Rohpapiers oder Kraftpapiers kann das Papiergewicht zwischen 50 and 250 g/m², bevorzugt zwischen 100 und 200 g/m², insbesondere zwischen 120 and 150 g/m² betragen.

Das zur Imprägnierung und/oder Beschichtung des Imprägnats verwendete Harz kann in einem Verfahren umfassend die folgenden Schritte hergestellt werden:
- Bereitstellen von mindestens einer (wässrigen) Harzsuspension;
- Zugabe von mindestens einem Katalysator, insbesondere einer Säure, zu der mindestens einen Harzsuspension;
- Zugabe von mindestens einer Verbindung der allgemeinen Formel (la) und mindestens einer Verbindung der allgemeinen Formel (II); und
- Dispergierung der kohlenstoffbasierten Partikel in der Harzsuspension unter Verwendung von Ultraschall (z.B. 160 W) und einem Dispergierwerkzeug (z.B. Ultraturax der Firma IKA mit 15 000 rpm).

Als Katalysator geeignete anorganische und/oder organische Säuren sind ausgewählt aus einer Gruppe enthaltend Phosphorsäure, Essigsäure, p-Toluolsulfonsäure, Salzsäure, Ameisensäure oder Schwefelsäure. Ebenfalls geeignet sind Ammoniumsalze wie Ammoniumsulfat, die als schwache Säuren reagieren. *p*-Toluolsulfonsäure ist besonders bevorzugt.

Zur anschließenden Neutralisierung des Reaktionsgemisches wird bevorzugt eine basische Verbindung, wie z.B. Ammoniak zugegeben. Dies führt zu einer Separation der wässrigen Phase mit dem Binderanteil von der alkoholischen Phase (ethanolischen Phase).

In dem Fall, dass anorganische Partikel der Bindemittelzusammensetzung zugemischt werden, werden die anorganischen Partikel bevorzugt in einer Menge zwischen 0,1 bis 15 Gew%, bevorzugt 0,5 bis 10 Gew%, insbesondere bevorzugt zwischen 1 bis 5 Gew% in verwendet.

Die Aufgabe der vorliegenden Erfindung wird auch mit einem Verfahren zur Herstellung der beschriebenen Impägnats gelöst.

Entsprechend wird ein Verfahren zur Herstellung eines Imprägnats mit antistatischen Eigenschaften bereitgestellt, welches die folgenden Schritte umfasst:
- Bereitstellen einer Harzsuspension enthaltend kohlenstoffbasierte Partikel, mindestens eine Verbindung der allgemeinen Formel (I) und optional mindestens eine Verbindung der allgemeinen Formel (II);
- Bereitstellen einer Papierlage,
- Imprägnieren der Papierlage mit der Harzsuspension, bevorzugt in einem Imprägnierkanal, und/oder Beschichten der Papierlage mit der Harzsuspension; und
- Trocknen der imprägnierten und/oder beschichteten Papierlage.

Wie oben bereits angemerkt, wird das vorliegende Imprägnat zur Herstellung von Laminaten mit antistatischen Eigenschaften verwendet. Unter einem Laminat wird hier ein Schichtstoff verstanden, der auf eine Trägerplatte aufgebracht (z.B. durch Kaschieren) werden kann. Laminate eignen sich besonders zur Herstellung von modernen Möbelteilen, Fußböden und anderen Oberflächen.

Das vorliegende Laminat umfasst mindestens ein Imprägnat mit antistatischen Eigenschaften, wobei das mindestens eine Imprägnat ein Overlayimprägnat, ein Dekorimprägnat und/oder ein Kraftimprägnat sein kann. In einer bevorzugten Ausführungsform umfasst das Laminat ein Kraftimprägnat und/oder ein Dekorimprägnat als Imprägnat mit antistatischen Eigenschaften.

In einer Ausführungsform des vorliegenden Laminates ist zusätzlich zu dem mindestens Imprägnat, mindestens eine weitere (nicht mit dem vorliegenden Harz versehene) Papierlage, mindestens eine Transparentpapierlage (Pergamin) und/oder mindestens eine Kunststofffolienlage vorgesehen. Die Verwendung und Anzahl von Imprägnaten mit antistatischen Eigenschaften und weiteren Papier- und Folienlagen im Laminat und der Schichtaufbau des Laminates orientiert sich insbesondere an der späteren Anwendung. Die verschiedenen Lagen bzw. Schichten können mehrfach im Laminataufbau enthalten sein, sich abwechseln bzw. ihre Position vertauschen. Wesentlich ist jedoch, dass mindestens ein Imprägnat mit antistatischen Eigenschaften im Laminat vorliegt.

Das vorliegend im Laminat zum Einsatz kommende Transparentpapier ist auch unter dem Begriff Pergamin bekannt. Pergamin ist ein aus fein gemahlenem Zellstoff hergestelltes, weitgehend fettdichtes, aber nicht nassfestes Transparentpapier. Seine hohe Transparenz erhält es durch sehr scharfe Satinage.

Eine im Laminat verwendete Kunststofffolienlage besteht aus Polymeren, insbesondere aus Polypropylen (PP), Polyethylen (PE), Polyethylenterephthalat (PET), thermoplastisches Polyurethan (TPU) oder Polyurethan.

Ein besonders bevorzugter Laminataufbau sieht wie folgt aus (von unten nach oben): mindestens ein Kraftimprägnat mit antistatischen Eigenschaften - mindestens eine Transparentpapierlage - mindestens eine Dekorpapierlage - mindestens eine Overlaypapierlage.

Das vorliegende Laminat bzw. Deck weist eine Aufbauhöhe mit einer Dicke zwischen 0,1 und 3mm, bevorzugt zwischen 0,1 und 2 mm auf.

Zur Herstellung des Laminates werden nach Herstellen des Imprägnats folgende Verfahrensschritte angewendet:
- Bereitstellen von mindestens einem Imprägnat mit antistatischen Eigenschaften;
- Bereitstellen von mindestens einer weiterenlmprägnatlage, insbesondere mindestens einer Dekorimprägnatlage und mindestens einer Overlayimprägnatlage, mindestens einer Transparentimprägnaatlage und/oder einer Kunststofffolienlage,
- Herstellen einer Schichtung aus einem Imprägnat mit antistatischen Eigenschaften, mindestens einer weiterenlmprägnatlage, insbesondere mindestens einer Dekorimprägnatlage und mindestens einer Overlayimprägnatlage, mindestens einer Transparentimprägnatlage und/oder einer Kunststofffolienlage, und
- Verpressen der Schichtung in einer Heißpresse, insbesondere in einer kontinuierlichen oder getakteten Presse (z.B. Kurztaktpresse) oder einer Doppelbandpresse .

Die Papierlagen können z.B. in einer CPL Presse zu einem Dünnlaminat verpresst werden.

Das verpresste Laminat (bzw. Deck) wird anschließend auf ein geeignetes Trägermaterial, insbesondere eine Trägerplatte (z.B. Holzwerkstoffträgerplatte) aufgelegt bzw. aufkaschiert. Die Kaschierung erfolgt unter Verwendung von mindestens einem Klebstoff, insbesondere einem Polyurethan-Klebstoff oder einem thermoplastischen Klebstoff. Dies passiert üblicherweise in einer Kaschieranlage.

Wie oben ebenfalls bereits angedeutet, kann das vorliegende Imprägnat auch (direkt) zur Beschichtung einer Holzwerkstoffplatte verwendet werden.

In diesem Falle wird eine Holzwerkstoffplatte umfassend mindestens eine Trägerplatte und mindestens ein auf mindestens einer Seite der Trägerplatte angeordnetes Imprägnat mit antistatischen Eigenschaften bereitgestellt.

Es ist besonders bevorzugt, wenn das mindestens eine Imprägnat mit antistatischen Eigenschaften ein Dekorimprägnat ist. In diesem Falle wird das Dekorimprägnat mit mindestens einer Overlayimprägnatlage und mindestens einem Gegenzugimprägnat zusammen mit einer Trägerplatte verpresst.

Ein besonders bevorzugter Aufbau einer Holzwerkstoffplatte sieht wie folgt aus (von unten nach oben): mindestens ein Gegenzug - mindestens eine Trägerplatte - mindestens ein Dekorimprägnat mit antistatischen Eigenschaften- mindestens eine Overlayimprägnatlage.

Mit der vorliegenden Erfindung ist es nunmehr möglich Werkstoffplatten mit antistatischen Eigenschaften bereitzustellen. So wird zum einen eine Werkstoffplatte bereitgestellt, die aus einer Trägerplatte besteht, auf deren Oberfläche ein antistatisches Imprägnat aufgelegt und verpresst ist. Zum anderen wird eine Werkstoffplatte bereitgestellt, die aus einer Trägerplatte mit darauf angeordneten und verpressten Laminat (mit antistatischen Imprägnat) besteht.

In beiden Fällen wird bevorzugt als Trägerplatte eine Platte aus einem Holzwerkstoff, aus Kunststoff, einem Holzwerkstoff-Kunststoff-Gemisch oder einem Verbundwerkstoff, insbesondere eine Span-, mitteldichte Faser(MDF)-, hochdichte Faser (HDF)-, Grobspan (OSB)- oder Sperrholzplatte, und/oder eine WPC-Platte (wood plastic composite) verwendet wird.

Die Erfindung wird nachfolgend an mehreren Ausführungsbeispielen näher erläutert.

### Ausführungsbeispiel 1: Herstellen einer ersten mit modifizierten Kohlenstoffpartikeln versetzten Harzsuspension

Zur Modifikation wird 90 g (bzw. 80 g) Melamin-Formaldehyd Harz und 8,5 g (bzw. 17 g) Wasser vorgelegt und anschließend 0,08 g (bzw. 0,16 g) para-Toluolsulfonsäure. Zu dieser wässrigen Lösung werden 0.7 g (bzw. 1,4 g Gylcidyloxypropyltriethoxysilan sowie 0,16 g (bzw. 0,32g) Ocytyltriethoxysilan hinzugegeben.

Anschließend werden 1,5 g (bzw. 3 g) CNTs unter Verwendung von Ultraschall und hohen Scherkräften (Ultraturray mit 15 000 rpm) in die Lösung dispergiert und bei 40 °C für 30 Minuten gerührt. Diese Lösung kann nun wie ein normales Harzsystem verarbeitet werden. (In Klammer stehen die Angaben für das Muster mit 3 % CNT im Harz)

### Ausführungsbeispiel 2: Herstellen einer zweiten mit modifizierten Kohlenstoffpartikeln versetzten Harzsuspension

Zur Modifikation wird 98,5 g Wasser vorgelegt und anschließend 0,08 g para-Toluolsulfonsäure. Zu dieser wässrigen Lösung werden 0.7 g Gylcidyloxypropyltriethoxysilan sowie 0,16 g Ocytyltriethoxysilan hinzugegeben.

Anschließend werden 1,5 CNTs unter Verwendung von Ultraschall und hohen Scherkräften (Ultraturray mit 15 000 rpm) in die Lösung dispergiert und bei 40 °C für 30 Minuten gerührt. Diese rein wässrige Lösung kann nun zu Melaminharz direkt an der Auftragsmaschine zu dosiert werden.

### Ausführungsbeispiel 3: Herstellen eines ersten Imprägnates

In einem Imprägnierkanalwird ein bedrucktes Dekorpapier (Papiergewicht: 80 g/m²) im ersten Tränkbad eine Kernimprägnierung unterworfen. Dabei wird die Imprägnierung mit einem Standardmelaminharz durchgeführt, das die üblichen Hilfsstoffe ( Härter, Netzmittel, Entschäumer usw. ) in den normalen Mengen enthalten waren. Die Tränkflotte hatte einen Feststoffgehalt von ca. 65 Gew%.

Damit nur eine Kernimprägnierung erreicht wurde, wurde das Dekorpapier nach der Imprägnierung beidseitig mit einem Messerrakel scharf abgezogen. Der Harzauftrag lag dabei bei ca. 80 Gew% Festharz.

Das Imprägnat wurde in einem Schwebetrockner getrocknet und anschließend in einem Rasterwerk rückseitig mit einem Melaminharz beschichtet in das neben den üblichen Hilfsstoffen noch ca. 2,5 Gew% Kohlenstoff-Nanoröhrchen aus dem Ausführungsbeispiel 2 enthalten waren. Es wurden ca. 30 g Harz fl./m² aufgetragen.

Das Imprägnat wurde in einem zweiten Schwebetrockner auf eine Restfeuchte von ca. 6 Gew% getrocknet. Das Imprägnat wurde auf Format geschnitten und abgestapelt.

Das Dekorimprägnat wurde mit einem Overlay und einem Gegenzug in einer KT-Presse auf eine großformatige HDF (2,8 × 2,07 m, 8 mm) bei ca. 200 °C, 15 sec. und 40 kg/cm² aufgepresst. Danach wurde aus der großformatigen Platte eine Muster 50 × 50 cm herausgeschnitten und zwei Wochen bei 50% rel. Feuchte, 23 °C klimatisiert.

Dann wurde an dem Muster der Oberflächenwiderstand gemäß der DIN EN 1081: 2018 bestimmt. Dabei ergab sich ein Wert von 1.0 × 10⁹ Ω. Bei einer Nullprobe ohne Kohlenstoff-Nanoröhrchen wurde ein Wert von 5 × 10¹² Ω gefunden

### Ausführungsbeispiel 4: Herstellen eines zweiten Imprägnates

In einem Imprägnierkanal wird ein bedrucktes Dekorpapier (Papiergewicht: 80 g/m²) im ersten Tränkbad mit einem Melaminharz imprägniert. Dabei wird die Imprägnierung mit einem Standardmelaminharz durchgeführt in dem die üblichen Hilfsstoffe ( Härter, Netzmittel, Entschäumer usw. ) in den normalen Mengen enthalten waren. Der Feststoffgehalt im Harz betrug ca. 65 Gew%. Zusätzlich waren in dem Harz noch ca. 2,5 Gew% Kohlenstoff-Nanoröhrchen aus dem Ausführungsbeispiel 2 enthalten.

Nach den Quetschwalzen waren noch ca. 140 g Harz fl./m² im Dekorpapier enthalten. Das Imprägnat wurde in einem Schwebetrockner auf eine Restfeuchte von ca. 6 Gew% getrocknet. Der Harzauftrag betrug ca. 110 Gew%. Das Imprägnat wurde dann auf Format geschnitten und abgestapelt.

Das Dekorimprägnat wurde mit einem Overlay und einem Gegenzug in einer KT-Presse auf eine großformatige HDF (2,8 × 2,07 m, 8 mm) bei ca. 200 °C, 15 sec. und 40 kg/cm² aufgepresst. Danach wurde aus der großformatigen Platte eine Muster 50 × 50 cm herausgeschnitten und zwei Wochen bei 50% rel. Feuchte, 23 °C klimatisiert.

Dann wurde an dem Muster der Oberflächenwiderstand gemäß der DIN EN 1081: 2018 bestimmt. Dabei ergab sich ein Wert von 8.0 × 10⁸ Ω. Bei einer Nullprobe ohne Kohlenstoff-Nanoröhrchen wurde ein Wert von 5 × 10¹² Ω gefunden.

### Ausführungsbeispiel 5: Herstellen eines dritten Imprägnates

In einem Imprägnierkanal wird ein Natronkraftpapier (Papiergewicht: 150 g/m²), das als Kernlage für ein CPL ( continous produced laminate ) dienen soll, einer Imprägnierung unterworfen. Dabei wird in einer Tränkwanne ein Imprägnierharz, das zu ca. 65 Gew% aus Melaminharz und zu 35 Gew% aus einem Phenolharz bestand, vorgelegt. Die beiden Harze hatten einen Feststoffgehalt von ca. 65 Gew%. Insgesamt lag der Feststoffgehalt nach Zugabe der Hilfsstoffe und Wasser bei ca. 60 Gew%. Das Harzgemisch enthielt die üblichen Hilfsstoffe (Härter, Netzmittel, Entschäumer usw.) in den normalen Mengen. Zusätzlich waren in dem Harz noch ca. 2,5 Gew% Kohlenstoff-Nanoröhrchen aus dem Ausführungsbeispiel 2 enthalten.

Das Natronkraftpapier wurde in der Tränkwanne mit dem Tränkharz beaufschlagt. Nach den Quetschwalzen waren im Natronkraftpapier noch ca. 215 g Harz fl./m² enthalten. Das Imprägnat wurde in einem Schwebetrockner auf eine Restfeuchte von ca. 6 Gew% getrocknet. Der Harzauftrag betrug ca. 85 Gew%. Das Imprägnat wurde dann aufgerollt.

Das Kraftimprägnat wurde mit einem Overlayimprägnat, einem Dekorimprägnat und einem Pergament in einer CPL-Presse zu einem Dünnlaminat verpresst (T= ca. 200 °C, v= 15 m/min und 60 kg/cm² ). Danach wurde aus dem Laminat eine Muster 50 × 50 cm herausgeschnitten und zwei Wochen bei 50% rel. Feuchte, 23 °C klimatisiert.

Dann wurde an dem Muster der Oberflächenwiderstand gemäß der DIN EN 1081: 2018 bestimmt. Dabei ergab sich ein Wert von 6.0 × 10⁸ Ω. Bei einer Nullprobe ohne Kohlenstoff-Nanoröhrchen wurde ein Wert von 9 × 10¹¹ Ω gefunden.

## Patentansprüche

1. Imprägnat mit einer imprägnierten Papierlage mit antistatischen Eigenschaften zur Verwendung in Laminaten oder zum Beschichten von Holzwerkstoffplatten, wobei das zur Imprägnierung und/oder Beschichtung des Papieres verwendete Harz
- kohlenstoffbasierte Partikel, insbesondere Kohlenstoffnanoröhren (CNT) oder Graphen, wobei die Oberfläche der kohlenstoffbasierten Partikel modifiziert ist mit
- mindestens einer Verbindung mit der allgemeinen Formel (la)
**R¹ₐSiX₍₄₋ₐ₎** **(Ia)**,
wobei
- X Methoxy, Ethoxy, n-Propoxy oder i-Propoxy ist,
- R¹ ein organischer Rest ist ausgewählt aus der Gruppe bestehend aus Methyl, Ethyl, Propyl oder Vinyl,,
- wobei R¹ mindestens eine funktionelle Gruppe Q₁ aufweist, die ausgewählt ist aus einer Gruppe bestehend aus einer Acryl-, Acryloxy-, Methacryl-, Methacryloxy-, und Epoxid- Gruppe,
- a = 1 oder 2 ist, und
- mindestens einer weiteren Verbindung der allgemeinen Formel (II)
**R³_{c}SiX_{(4-c)}** **(II)**,
wobei
- X die obige Bedeutung aufweist,
- R³ ein nicht-hydrolysierbarer organischer Rest R³ ist ausgewählt aus der Gruppe bestehend aus C1-C10 Alkyl, C6-C10 Aryl, und
- c = 1, 2 oder 3 ist, und
- SiO₂, Al₂O₃, ZrO₂, TiO₂-Partikel als anorganische Partikel
umfasst.

2. Imprägnat nach Ansprcuh 1 oder 2, **dadurch gekennzeichnet, dass** das molare Verhältnis des Silanverbindung der Formel (la) zu den Silanverbindungen der Formel (II) zwischen 1 : 0,5 und 1 : 2, bevorzugt zwischen 1 : 1 und 1 : 1,5 liegt.

3. Imprägnat nach einem der vorhergehenden Ansprüche, **dadurch gekennzeichnet, dass** die anorganischen Partikel in einem Mengenbereich von 0,1 bis 25 Gew%, bevorzugt 5 bis 20 Gew%, bezogen auf den Feststoffgehalt des Silan-Materials (Sol-Gel-Materials), verwendet werden.

4. Imprägnat nach einem der vorhergehenden Ansprüche, **dadurch gekennzeichnet, dass** das Harz Kohlenstoffnanoröhren modifiziert mit Glycidyloxypropylmethyldiethoxysilan, Glycidyloxypropyltriethoxysilan und Octyltriethoxysilan, bevorzugt einer Mischung aus Glycidyloxypropyltriethoxysilan und Octyltriethoxysilan umfasst.

5. Imprägnat nach einem der vorhergehenden Ansprüche, **dadurch gekennzeichnet, dass** das mit dem Harz zu imprägnierende und/oder zu beschichtende Papier ein Dekor-, Kraft-, Overlay- oder Rohpapier ist.

6. Imprägnat nach einem der vorhergehenden Ansprüche, **dadurch gekennzeichnet, dass** das zur Imprägnierung und/oder Beschichtung verwendete Harz ein wässriges Formaldehyd-haltiges Harz, insbesondere ein Melamin-Formaldehyd-Harz, Harnstoff-Formaldehyd-Harz, Melamin-Harnstoff-Formaldehyd-Harz, Phenol-Formaldehyd-Harz oder Mischungen davon ist.

7. Imprägnat nach einem der vorhergehenden Ansprüche, **dadurch gekennzeichnet, dass** der Feststoffgehalt des Harzes zwischen 50 und 75 Gew%, bevorzugt zwischen 55 und 70 Gew%, insbesondere bevorzugt zwischen 60 und 65 Gew% beträgt.

8. Verfahren zum Herstellen eines Imprägnats nach einem der vorhergehenden Ansprüche
- Bereitstellen einer Harzsuspension enthaltend kohlenstoffbasierte Partikel, mindestens eine Verbindung der allgemeinen Formel (la) und mindestens eine Verbindung der allgemeinen Formel (II);
- Bereitstellen einer Papierlage,
- Imprägnieren der Papierlage mit der Harzsuspension, bevorzugt in einem Imprägnierkanal, und/oder Beschichten der Papierlage mit der Harzsuspension; und
- Trocknen der imprägnierten und/oder beschichteten Papierlage.

9. Laminat umfassend mindestens ein Imprägnat mit antistatischen Eigenschaften nach einem der Ansprüche 1-7.

10. Laminat nach Anspruch 9, **dadurch gekennzeichnet, dass** das mindestens eine Imprägnat mit antistatischen Eigenschaften ein Overlayimprägnat, Kraftimprägnat und/oder ein Dekorimprägnat ist.

11. Laminat nach einem der Ansprüche 9-10, **dadurch gekennzeichnet, dass** zusätzlich zu dem mindestens Imprägnat, mindestens eine weitere, nicht mit dem vorliegenden Harz versehene Papierlage, mindestens eine Transparentpapierlage (Pergamin) und/oder mindestens eine Kunststofffolienlage vorgesehen ist.

12. Laminat nach einem der Ansprüche 9-10, **gekennzeichnet durch** folgenden Aufbau mindestens ein Kraftimprägnat mit antistatischen Eigenschaften - mindestens eine Transparentpapierlage - mindestens eine Dekorpapierlage - mindestens eine Overlaypapierlage.

13. Holzwerkstoffplatte umfassend mindestens eine Trägerplatte und mindestens ein auf mindestens einer Seite der Trägerplatte angeordnetes Imprägnat mit antistatischen Eigenschaften nach einem der Ansprüche 1-7.

14. Holzwerkstoffplatte nach Anspruch 13, **dadurch gekennzeichnet, dass** das mindestens eine Imprägnat mit antistatischen Eigenschaften ein Dekorimprägnat ist.

## Claims

1. Impregnate with an impregnated paper layer with antistatic properties for use in laminates or for coating wood-based panels, wherein the resin used for impregnating and/or coating the paper comprises
- carbon-based particles, in particular carbon nanotubes (CNT) or graphene, wherein the surface of the carbon-based particles is modified with
- at least one compound having the general formula (la)
**R¹ₐ SiX₍₄₋ₐ₎** **(Ia)**,
where
- X is methoxy, ethoxy, n-propoxy or i-propoxy,
- R¹ is an organic moiety selected from the group consisting of methyl, ethyl, propyl or vinyl,
- wherein R¹ has at least one functional group Q₁ selected from a group consisting of an acrylic, acryloxy, methacrylic, methacryloxy, and epoxy group,
- a = 1 or 2, and
- at least one further compound of the general formula (II)
**R³_{c} SiX_{(4-c)}** **(II)**,
where
- X has the above meaning,
- R³ is a non-hydrolysable organic moiety R³ selected from the group consisting of C1-C10 alkyl, C6-C10 aryl, and
- c = 1, 2 or 3, and
- SiO₂ , Al O₂₃ , ZrO₂, TiO₂ -particles as inorganic particles.

2. Impregnate according to claim 1 or 2, **characterized in that** the molar ratio of the silane compound of the formula (Ia) to the silane compounds of the formula (II) is between 1 : 0.5 and 1 : 2, preferably between 1 : 1 and 1 : 1.5.

3. Impregnate according to one of the preceding claims, **characterized in that** the inorganic particles are used in a quantity range of 0.1 to 25% by weight, preferably 5 to 20% by weight, based on the solids content of the silane material (sol-gel material).

4. Impregnate according to one of the preceding claims, **characterized in that** the resin comprises carbon nanotubes modified with glycidyloxypropylmethyldiethoxysilane, glycidyloxypropyltriethoxysilane and octyltriethoxysilane, preferably a mixture of glycidyloxypropyltriethoxysilane and octyltriethoxysilane.

5. Impregnate according to one of the preceding claims, **characterized in that** the paper to be impregnated and/or coated with the resin is a decorative, kraft, overlay or base paper.

6. Impregnate according to one of the preceding claims, **characterized in that** the resin used for impregnation and/or coating is an aqueous formaldehyde-containing resin, in particular a melamine-formaldehyde resin, urea-formaldehyde resin, melamine-urea-formaldehyde resin, phenol-formaldehyde resin or mixtures thereof.

7. Impregnate according to one of the preceding claims, **characterized in that** the solids content of the resin is between 50 and 75% by weight, preferably between 55 and 70% by weight, more preferably between 60 and 65% by weight.

8. Process for producing an impregnate according to one of the preceding claims
- Providing a resin suspension comprising carbon-based particles, at least one compound of the general formula (Ia) and at least one compound of the general formula (II);
- Providing a paper layer,
- impregnating the paper layer with the resin suspension, preferably in an impregnation channel, and/or coating the paper layer with the resin suspension; and
- Drying of the impregnated and/or coated paper layer.

9. A laminate comprising at least one impregnate having antistatic properties according to one of claims 1-7.

10. Laminate according to claim 9, **characterized in that** the at least one impregnate with antistatic properties is an overlay impregnate, kraft impregnate and/or a decorative impregnate.

11. Laminate according to one of claims 9-10, **characterized in that**, in addition to the at least impregnate, at least one further paper layer not provided with the present resin, at least one transparent paper layer (glassine) and/or at least one plastic film layer is provided.

12. Laminate according to any one of claims 9-10, **characterized by** the following structure at least one kraft impregnate with antistatic properties - at least one transparent paper layer - at least one decorative paper layer - at least one overlay paper layer.

13. Wood-based panel comprising at least one carrier board and at least one impregnate with antistatic properties arranged on at least one side of the carrier board according to any one of claims 1-7.

14. Wood-based panel according to claim 13, **characterized in that** the at least one impregnate with antistatic properties is a decorative impregnate.

## Revendications

1. Produit imprégné avec une couche de papier imprégnée avec des propriétés antistatiques à utiliser dans des stratifiés ou pour le revêtement de panneaux en matériau dérivé du bois, dans lequel la résine utilisée pour l'imprégnation et/ou le revêtement du papier comprend
- des particules à base de carbone, en particulier des nanotubes de carbone (CNT) ou du graphène, dans lequel la surface des particules à base de carbone est modifiée avec
- au moins un composé avec la formule générale (la)
R¹ₐSiX₍₄₋ₐ₎ (Ia),
dans lequel
- X est du méthoxy, de l'éthoxy, du n-propoxy ou du i-propoxy,
- R¹ est un radical organique choisi dans le groupe constitué par le méthyle, l'éthyle, le propyle ou le vinyle,
- dans lequel R¹ présente au moins un groupe fonctionnel Q₁, qui est choisi dans un groupe constitué par un groupe acryle, acryloxy, méthacryle, méthacryloxy, et époxide,
- a = 1 ou est 2, et
- au moins un autre composé de formule générale (II)
R³_{c}SiX_{(4-c)} **(II)**,
dans lequel
- X présente la signification ci-dessus,
- R³ est un radical organique R³ non hydrolysable choisi dans le groupe constitué par C1-C10 alkyle, C6-C10 aryle, et
- c = 1, 2 ou est 3, et
- des particules de SiO₂, Al₂O₃, ZrO₂, TiO₂ en tant que particules organiques.

2. Produit imprégné selon la revendication 1 ou 2, **caractérisé en ce que** le rapport molaire du composé silane de formule (la) aux composés silane de formule (II) est compris entre 1:0,5 et 1:2, de préférence entre 1:1 et 1:1,5.

3. Produit imprégné selon l'une quelconque des revendications précédentes, **caractérisé en ce que** les particules inorganiques sont utilisées dans une plage de quantité de 0,1 à 25 % en poids, de préférence 5 à 20 % en poids, par rapport à la teneur en matière solide du matériau de silane (matériau sol-gel).

4. Produit imprégné selon l'une quelconque des revendications précédentes, **caractérisé en ce que** la résine comprend des nanotubes de carbone modifiés avec du glycidyloxypropylméthyldiéthoxysilane, glycidyloxypropyltriéthoxysilane et octyltriéthoxysilane, de préférence un mélange de glycidyloxypropyltriéthoxysilane et octyltriéthoxysilane.

5. Produit imprégné selon l'une quelconque des revendications précédentes, **caractérisé en ce que** le papier à imprégner et/ou à revêtir avec la résine est un papier décoratif, kraft, overlay ou brut.

6. Produit imprégné selon l'une quelconque des revendications précédentes, **caractérisé en ce que** la résine utilisée pour l'imprégnation et/ou le revêtement est une résine aqueuse contenant du formaldéhyde, en particulier une résine mélamine-formaldéhyde, résine urée-formaldéhyde, résine mélamine-urée-formaldéhyde, résine phénol-formaldéhyde ou des mélanges de celles-ci.

7. Produit imprégné selon l'une quelconque des revendications précédentes, **caractérisé en ce que** la teneur en matière solide des résines est comprise entre 50 et 75 % en poids, de préférence entre 55 et 70 % en poids, de manière particulièrement préférée entre 60 et 65 % en poids.

8. Procédé pour fabriquer un produit imprégné selon l'une quelconque des revendications précédentes
- la fourniture d'une suspension de résine contenant des particules à base de carbone, au moins un composé de formule générale (la) et au moins un composé de formule générale (II) ;
- la fourniture d'une couche de papier,
- l'imprégnation de la couche de papier avec la suspension de résine, de préférence dans un canal de produit imprégné, et/ou le revêtement de la couche de papier avec la suspension de résine ; et
- le séchage de la couche de papier imprégnée et/ou revêtue.

9. Stratifié comprenant au moins un produit imprégné avec des propriétés antistatiques selon l'une quelconque des revendications 1-7.

10. Stratifié selon la revendication 9, **caractérisé en ce que** le au moins un produit imprégné avec des propriétés antistatiques est un produit imprégné overlay, produit imprégné kraft et/ou un produit imprégné décoratif.

11. Stratifié selon l'une quelconque des revendications 9-10, **caractérisé en ce qu'**en plus du au moins produit imprégné, au moins une autre couche de papier non pourvue de la résine présente, au moins une couche de papier transparent (pergamine) et/ou au moins une couche de film plastique est prévue.

12. Stratifié selon l'une quelconque des revendications 9-10, **caractérisé par** la constitution suivante au moins un produit imprégné kraft avec des propriétés antistatiques - au moins une couche de papier transparent - au moins une couche de papier décoratif - au moins une couche de papier overlay.

13. Panneau en matériau dérivé du bois comprenant au moins un panneau de support et au moins un produit imprégné avec des propriétés antistatiques selon l'une quelconque des revendications 1-7 disposé sur au moins une face du panneau de support.

14. Panneau en matériau dérivé du bois selon la revendication 13, **caractérisé en ce que** le au moins un produit imprégné avec des propriétés antistatiques est un produit imprégné décoratif.
